# EUROPÄISCHE PATENTSCHRIFT

(11) **EP 0 760 837 B1**
(45) Veröffentlichungstag und Bekanntmachung des Hinweises auf die Patenterteilung: **20.01.1999**
(21) Anmeldenummer: 95922462.7
(22) Anmeldetag: 18.05.1995
(51) Int. Cl.: C09B 67/00, C09D 5/36, C09K 19/00, C09K 19/52

(54) **EFFEKTLACK BZW. EFFEKTLACKIERUNG, INSBESONDERE FÜR FAHRZEUGKAROSSERIEN, UNTER VERWENDUNG VON FLÜSSIGKRISTALLINEN INTERFERENZPIGMENTEN**
EFFECT LACQUER AND LACQUERING, IN PARTICULAR FOR CAR BODIES, INVOLVING THE USE OF LIQUID CRYSTAL INTERFERENCE PIGMENTS
LAQUE A EFFET ET LAQUAGE A EFFET, NOTAMMENT POUR CARROSSERIES DE VEHICULES, IMPLIQUANT L'UTILISATION DE PIGMENTS D'INTERFERENCE A CRISTAUX LIQUIDES

(30) Priorität: 24.05.1994 DE 4418076
(43) Veröffentlichungstag der Anmeldung: 12.03.1997
(73) Patentinhaber: DAIMLER-BENZ AKTIENGESELLSCHAFT, 70567 Stuttgart (DE); Wacker-Chemie GmbH, 81737 München (DE)
(72) Erfinder: SAILER, Maria-Theresia, D-89073 Ulm (DE); KIRSCHBAUM, Martin, D-89075 Ulm (DE); MÜLLER-REES, Christoph, D-82049 Pullach (DE)
(74) Vertreter: Dahmen, Toni, Dipl.-Ing.
(86) Internationale Anmeldenummer: EP9501895
(87) Internationale Veröffentlichungsnummer: WO9532248

(56) Entgegenhaltungen:
- FR-A- 2 340 359
- DATABASE WPI Derwent Publications Ltd., London, GB; AN 87-089962 & JP,A,62 039 686 (DAICEL CHEM. IND.KK)
- MOLECULAR CRYSTALS AND LIQUID CRYSTALS ,LETTERS, Bd. 99, Nr. 1/4, 1983 NEW-YORK(USA), Seiten 29-38, S.N.BHADANI 'CELLULOSE-BASED LIQUID CRYSTALLINE POLYMERS'

## Beschreibung

Die Erfindung betrifft Interferenzpigmente auf der Basis von flüssigkristallinen Polymeren nach Anspruch 1 einen Effekt lack nach dem Oberbegriff des Anspruches 19 und damit lackierte Gebrauchsgegenstände, insbesondere Kraftfahrzeug-Karosserien, nach dem Oberbegriff des Anspruches 28. Außerdem beinhaltet die Erfindung ein Verfahren zur Herstellung der Interferenzpigmente nach Anspruch 9. Flüssigkristalline Polymere gehen beispielsweise aus der DE 40 08 076 A, der EP 66 137 A und der US-PS 5,188,760 als bekannt hervor.

Bei den üblichen Fahrzeug-Uni-Lacken sind in der Regel in einen klaren Träger aus Kunstharz Farbpigmente eingelagert, die die gewünschte Farbtönung des Lackes bestimmen. Die Farbwirkung dieser Pigmente beruht auf einer spektral selektiven Absorptionswirkung, so daß von dem auftreffenden - weißen - Licht ein spektral breiter Anteil von den Pigmenten absorbiert und nur ein spektral schmaler Anteil reflektiert wird.

In dem Bemühen um brillantere Farbeindrücke insbesondere bei Fahrzeugkarosserien hat man die sog. Effektlacke entwickelt. Bei einer Gruppe daraus, den Metallic-Lacken sind u.a. kleine Metallflitter als Pigmente mit in den Träger eingemischt. Bei einer anderen Gruppe werden beschichtete Glimmerpartikel als Pigmente verwendet. Bei diesen Effektlacken ist eine bessere Farbbrillanz als bei den Uni-Lacken erreichbar; außerdem ist je nach Lichteinfallrichtung und/oder Betrachtungsrichtung ein leicht geänderter Farbeindruck vorhanden, was erwünscht ist. Die EP 383 376 A1 beschreibt einen solchen Effektlack, bei dem kleine Glimmerplättchen allseits gleichmäßig mit einem vernetzten, flüssigkristallinen Polymer (LCP) in chiral-nematischer Anordnung beschichtet sind. Die Farberscheinung derartiger Pigmente kommt durch eine Interferenzerscheinung zustande. Es werden nur diejenigen Lichtwellen des einfallenden Lichtes reflektiert, deren Wellenlänge mit den äquidistanten Netzebenenabständen der flüssigkristallinen Polymere interferieren, wogegen die Lichtanteile anderer Wellenlängen durch den durchsichtigen Lack-Körper hindurchgehen und von dem - vorzugsweise - dunklen Untergrund absorbiert werden. Derartige, plättchenförmige, parallel zur lackierten Oberfläche ausgerichtete Interferenzpigmente haben bei orthogonaler Betrachtung eine bestimmte erste Farbe - Basisfarbe - und unter einer geneigten Betrachtungsrichtung eine zweite, kürzerwellige Farbe. Diese vom Betrachtungswinkel abhängige Farberscheinung der lackierten Oberfläche macht die Lackierung sehr effektvoll und für bestimmte Anwendungsfälle, bei denen derartige Farbeffekte vom Kunden positiv aufgenommen werden, sehr wünschenswert. Nachteilig ist die aufwendige Herstellung der Interferenzpigmente, wodurch sich der Effekt lack und dementsprechend die Effektlackierung auf dem Gebrauchsgegenstand recht kostspielig gestalten.

Der Anmelderin ist vertraulich die Herstellung von Interferenzpigmenten auf der Basis von Polysiloxanen bekannt geworden, wobei diese jeweils als Ganzes aus kleinen Bruchstücken einer dünnen vernetzten Folie aus flüssigkristallinen Polymeren bestehen. Diese Interferenzpigmente sind farblos und klar durchsichtig. Die mit ihnen erzielbare Farbwirkung beruht auf der regelmäßigen Struktur und der gleichmäßigen Anordnung der Moleküle in Form eines Flüssigkristalls und auf einer darauf zurückzuführenden Interferenz eines bestimmten spektralen Lichtanteiles, für den das Pigment reflektiv wirkt. Die anderen Lichtanteile gehen durch das Pigment hindurch. Dadurch lassen sich verblüffende Farbeffekte unterschiedlicher Art erzielen, je nach Ausgestaltung der Lackierung bzw. der Interferenzpigmente und deren Mischung. Abgesehen von der neuartigen ästhetischen Farbwirkung der Lackierung bzw. des dazu verwendeten Lackes bietet diese Lackierung auch noch eine Reihe technischer Vorteile. Die Interferenzpigmente haben aufgrund ihres chemischen Aufbaues ein etwa gleich großes spezifisches Gewicht wie der Träger der Pigmente bzw. die Lackbasis. Dadurch kommt es nicht zu einer massebedingten Entmischung von Pigmenten und Lackbasis bei der Lagerung des Lackes oder beim Applizieren des Lackes durch Versprühen mittels einer hochrotierenden Glocke, wie dies bei konventionellen Lakken mit spezifisch schweren Absorptionspigmenten - meist auf Metallbasis - zu beobachten ist. Da sich im übrigen das gesamte Farbspektrum durch Mischen einiger weniger Typen von Interferenzpigmente in unterschiedlichen Verhältnissen beim Lackierer herstellen lassen, kann die Lagerhaltung vor Ort auf einige wenige Grundtypen von Lacken beschränkt werden, so daß die Logistik bezüglich der verschieden Lackfarben ganz erheblich vereinfacht ist. Jedoch haben die Polysiloxane, die für diese flüssigkristallinen Polymere verwendet werden, den Nachteil, daß sie in mehreren Stufen und aus teuren Ausgangsstoffen synthetisiert werden müssen. Die Interferenzpigmente der angesprochenen Art werden gewonnen, indem die Polymere aus dem flüssigen oder flüssigkristallinen Zustand heraus auf eine glatte Unterlage, beispielsweise auf eine polierte Walze aufgerakelt werden, wodurch ein dünner Film gebildet wird. Durch den Rakelvorgang kommt es zu einer Ausrichtung der Moleküle innerhalb des Filmes, nämlich zu einer homogenen Orientierung; erst nach diesem Ausrichten weist der Film eine Interferenzfarbe auf. Beim Schervorgang der flüssigkristallinen Polymere stellen sich während des Rakelns selbsttätig äquidistante Netzebenen und damit farbselektiv wirkende Beugungsstrukturen ein.

Der Farbgrundton der Interferenzpigmente ist bestimmt durch den Farbeindruck bzw. die Farbe, die sich bei senkrechter Beleuchtung der lackierten Oberfläche und senkrechter Betrachtung einstellt. Nachdem bei schräg zur Oberfläche gerichtetem Strahlengang die Netzebenenabstände - geometrisch bedingt - gegenüber der orthogonalen Strahlrichtung verändert erscheinen, verschiebt sich der Farbeindruck in Richtung zu einer im Farbspektrum in Richtung zu kürzeren Wellenlängen versetzt liegenden, anderen Farbe, und zwar hängt dies von der relativen Betrachtungsrichtung der Oberfläche ab. D.h. je nach Lage einer bestimmten Oberflächenpartie zum Strahlengang des Betrachters erscheint die Oberflächenpartie in der Grundfarbe oder in der anderen kürzerwelligen Farbe. Beispielsweise können Interferenzpigmente der Grundfarbe Rot in die Farbe Grün umschlagen; mit anderen Interferenzpigmenten ist ein Farbumschlag zwischen grün und blau darstellbar.

Die Intensität der dabei wahrnehmbaren Farben ist um so stärker, je dunkler die Farbe des Untergrundes ist, der die farbbestimmende Lacklage trägt, wobei der Farbton des Untergrundes allerdings durch absorptiv wirkende Farbpigmente bestimmt sein muß. Und zwar beruht dies darauf, daß die durch die Interferenzpigmente hindurchgehenden Lichtanteile vom dunklen Untergrund mehr oder weniger vollständig absorbiert werden, und zwar um so mehr, je dunkler der Untergrund ist.

Eine Bedingung für das Auftreten von flüssigkristallinen Phasen ist eine starre mesogene Molekülgestalt. Die Repititionseinheiten flüssigkristalliner Polymere enthalten die mesogenen Einheiten. Die beiden am häufigsten realisierten Molekülstrukturen sind die Seitenketten-LC-Polymere, bei denen die mesogenen Einheiten als Seitenketten des Polymerrückgrates chemisch fixiert sind, und die Hauptketten-LC-Polymere, bei denen die mesogenen Einheiten das Polymerrückgrat oder Teil des Polymerrückgrates bilden. Neben den Homopolymeren sind eine Vielzahl von Copolymeren darstellbar, die verschiedene mesogene Einheiten enthalten können.

Der Erfindung liegt die Aufgabe zugrunde, bezüglich der verschiedenen gattungsgemäß zugrundegelegten Kategorien, nämlich Interferenzpigmente, Verfahren zu deren Herstellung, Lack bzw. lackierter Gebrauchsgegenstand eine preiswerte und leicht verfügbare stoffliche Basis aufzufinden, die die gleichen Farbeffekte und Brillanz bei der Lackierung erwarten läßt und die einfacher, d.h. in weniger Synthesestufen herstellbar ist und die nur eine Komponente erfordert, um ein chiral-nematisches Polymer herzustellen.

Die gestellte Aufgabe wird erfindungsgemäß bezüglich der zugrundegelegten Interferenzpigmente durch die kennzeichnenden Merkmale des Anspruches 1, bezüglich des Verfahrens zu deren Herstellung durch die kennzeichnenden Merkmale des Anspruches 9, bezüglich des Lackes durch die kennzeichnenden Merkmale des Anspruches 19 und bezüglich des zugrundegelegten Gebrauchsgegenstandes durch die kennzeichnenden Merkmale des Anspruches 28 gelöst.

Die als Interferenzpigmente eingesetzten Hauptketten-Polymere bestehen aus orientierten dreidimensional vernetzten Substanzen flüssigkristalliner Struktur, mit einer chiral-nematischen (cholesterischen) Phase bei Raumtemperatur, wodurch die Orientierung erleichtert wird. Die Orientierung in der chiral-nematischen Phase wird durch die Vernetzung mittels UV-Licht dauerhaft fixiert.

Der durch die Interferenzpigmente hervorzurufende Farbton ist durch den Netzebenenabstand in dem vernetzten Polymer, aus dem das Interferenzpigment besteht, bestimmt. Und zwar wird derjenige Farbton hervorgerufen, dessen Wellenlänge mit dem Netzebenenabstand übereinstimmt. Um nun nicht für jeden Farbton ein gesondertes Polymer bereitstellen zu müssen, nutzt man eine vorteilhafte Erscheinung aus, nämlich daß sich beim Zusammenmischen von unvernetzten Polymeren mit jeweils unterschiedlichen Netzebenenabständen in der Mischung ein zwischen den Netzebenenabständen liegender, einheitlicher, neuer Netzebenenabstand einstellt. Deshalb ist es zweckmäßig, wenn die bei der Filmbildung auf die Unterlage aufzurakelnde Masse aus wenigstens zwei unterschiedlichen, unvernetzten flüssigkristallinen Polymeren - veresterten Celluloseethern - gemischt ist, wobei die Netzebenenabstände in dem einen Polymer größer und in dem anderen Polymer kleiner als die Wellenlänge der gewünschten Interferenzfarbe des herzustellenden Interferenzpigmentes sind, wobei das Mischungsverhältnis der Polymere umgekehrt analog zu den Unterschieden der Netzebenenabstände der einzelnen Polymere zur Wellenlänge der gewünschten Interferenzfarbe gewählt ist.

Eine andere Möglichkeit zur Einstellung der gewünschten Interferenzfarbe des herzustellenden Interferenzpigmentes besteht darin, in dem auf die Unterlage aufgerakelten Film in noch unvernetztem Zustand die Ganghöhe der Helix der chiral-nematisch orientierten Moleküle und somit den Netzebenenabstand in dem Film durch eine Temperierung des Filmes zu beeinflussen derart, daß der Netzebenenabstand der Wellenlänge der gewünschten Interferenzfarbe entspricht. Anschließend wird der Film durch Bestrahlen mit UV-Licht vernetzt und der eingestellte Netzebenenabstand dauerhaft fixiert.

Der im Zusammenhang mit der Herstellung der Interferenzpigmente erzeugte Film sollte zumindest nach dem Aushärten eine Dicke von 5 bis 200 µm haben. Durch Zerkleinern des ausgehärteten Filmes in kleine Partikel entstehen die vorliegend erforderlichen Interferenzpigmente in Plättchenform, in denen die Hauptgruppen-Mesogene vorzugsweise chiral-nematisch geordnet sind. Die verwendbaren plättchenförmigen Interferenzpigmente haben einen Plättchendurchmesser in der Größenordnung von 5 bis 200 µm; kleinere oder größere Partikel, die beim Zerkleinern des ausgehärteten Filmes entstehen, müssen beispielsweise durch Siebvorgänge aussortiert werden. Beim Applizieren eines damit pigmentierten Basislackes auf einer Oberfläche ordnen sich die plättchenförmigen Pigmente selbsttätig durch Verlaufvorgänge im Basislack parallel zur Oberfläche an.

Die Intensität der Interferenzfarben ist um so stärker, je dunkler die Farbe des absorptiv wirkenden Untergrundes ist, der die farbbestimmende Lacklage trägt. Deshalb besteht eine zweckmäßige Ausgestaltung darin, den die farbbestimmende Lacklage tragenden Untergrund möglichtst dunkel, vorzugsweise schwarz zu gestalten.

Eine andere zweckmäßige Ausgestaltung der Lackierung kann darin gesehen werden, daß der Untergrund der farbbestimmenden Lacklage in einem solchen durch Absorptionspigmente hervorgerufenen Farbton gehalten ist, der mit der Grundfarbe oder mit der umgeschlagenen Farbe der Interferenzpigmente etwa übereinstimmt. Dadurch wird erreicht, daß die mit dem Untergrund übereinstimmende Farbe besonders intensiv und brillant erscheint. In der andere Betrachtungs- bzw. Beleuchtungsrichtung erscheint die Farbe der lackierten Oberfläche zwar auch in dem betreffenden Farbton des Untergrundes, ist jedoch in der anderen Farbe der Interferenzpigmente abgetönt und mit fein verteilten Flitterpunkten übersäht. Daneben ist es auch möglich, den die farbbestimmende Lacklage tragenden Untergrund mittels Absorptionspigmenten weder dunkel, noch in einer der Farben der Interferenzpigmente, sondern in einer dritten Farbe abzutönen, die beispielsweise im Farbspektrum zwischen beiden Farben liegt oder einen besonders großen spektralen Abstand zu wenigstens einer der beiden Farben hat. Dadurch kann ein dreifacher Farbeindruck des lackierten Gegenstandes erreicht werden.

Alternativ zur zweckentsprechenden Abtönung des die farbbestimmende Lacklage tragenden Untergrundes oder auch zusätzlich dazu ist es auch denkbar, dem - u.U. auch unterschiedliche - Interferenzpigmente enthaltenden Effektlack Absorptionspigmente beizumischen. Durch das Zumischen von dunklen Absorptionspigmenten zum erfindungsgemäßen Effektlack kann ein durchaus vergleichbarer Eindruck wie durch einen dunklen Untergrund erreicht werden. Ähnlich verhält es sich beim Zumischen von hellen Absorptionspigmenten; sie bewirken eine Abschwächung des Farbumschlages und der einzelnen Farbintensitäten. Durch Zumischen von Absorptionspigmenten in einer der Effektfarben kann eine Intensivierung dieses Farbeindruckes zu Lasten der Farbwirkung der anderen Effektfarbe erreicht werden. Das Zumischen von Absorptionspigmenten zum Effektlack empfiehlt sich dann, wenn ein heller oder gar ein metallisch glänzender Untergrund mit Effekt lack lackiert werden soll. Eine solche Aufgabe kann sich beispielsweise beim Umlackieren von Altfahrzeugen oder bei Reparaturlackierungen stellen.

Nachfolgend wird anhand eines Beispieles die Erfindung noch näher erläutert:

### Herstellung des farbgebenden Filmes:

In eine Lösung von 5g 0-(2-Hydroxypropyl)-cellulose der Molmasse 100 000 (Firma Aldrich, Steinheim, Bestell-Nr. 19.188-4) und 6ml N,N-Dimethylanilin in 150 ml abs. Dioxan, ließ man 15 ml Vinylessigsäurechlorid zutropfen. Nachdem die Mischung 1 h bei Raumtemperatur gerührt worden war, wurde sie auf 100°C erwärmt und 4 h bei dieser Temperatur gehalten. Danach wurde die Reaktionsmischung auf Raumtemperatur abgekühlt und in 1 1 dest. Wasser eingegossen. Dabei bildete sich ein im Wasser unlösbarer Rückstand, der mit 200 ml Aceton aufgenommen und mehrmals mit Wasser/Aceton umgefällt wurde. Als Endprodukt wurden 6,25 g einer zähen weißen Substanz erhalten.

Der Substanz wurde ein Photoinitiator (Darocur 4265 der Firma Ciba-Geigy) hinzugefügt und diese mit einer Schichtdicke von etwa 10 µm bei einer Temperatur von 70°C mittels eines automatischen Filmaufziehgerätes auf ein schwarz grundiertes Prüfblech aufgebracht. Dabei wurde der Film mechanisch geschert. Der anschließend mittels UV-Licht ausgehärtete Film zeigte bei senkrechter Beleuchtung und senkrechter Aufsicht eine blaue Farbe (Reflektionswellenlänge λ = 470 nm). Es konnte hier kein Farbumschlag beobachtet werden, weil diese Farbe im UV-Bereich lag.

### Herstellung der Interferenzpigmente:

Der farbgebende Film wurde von der Unterlage mit einem klingenartigen Werkzeug abgeschält, wobei schuppenartige Gebilde erhalten wurden. Die Schuppen wurden anschließend mit einer Luftstrahlmühle (Firma Alpine) zerkleinert; es sind auch andere thermische schonende Mühlen für Kunststoffteile einsetzbar. Das erhaltene Mahlgut wurde darauf gesiebt und eine Siebfraktion mit einer mittleren Größe von etwa 30 µm für die Weiterverarbeitung verwendet.

### Herstellung des Lackes:

Die erhaltenen Interferenzpigmente wurden mit einem Klarlack im Verhältnis von 1 : 7 bis 1 : 20 Gewichtsteilen gemischt. Als Klarlack wurde ein Zweikomponenten-Decklack auf Polyurethanbasis verwendet (z.B. 2K-PU-Decklack 0111 der Firma BASF Lacke u. Farben, Münster-Hiltrup oder ein Lack "Standox" der Firma Herberts, Wuppertal).

Die mit dem Erfindungsgegenstand erzielten Vorteile bestehen insbesondere darin, daß als Ausgangsmaterial für die Interferenzpigmente ein reichlich vorhandenes, kostengünstiges Biopolymer zur Verfügung steht. Dadurch, daß der Temperaturbereich, in dem die Hauptketten-Polymeren die chiral-nematische Phase aufweisen, im Raumtemperaturbereich liegt, wird die Orientierung hinsichtlich des dazu erforderlichen Energieaufwandes erheblich erleichtert. Insgesamt seien die mit der Erfindung verbundenen Vorteile nachfolgend noch einmal aufgelistet:
> Es können preiswerte und leicht verfügbare Ausgangsmaterialien eingesetzt werden,
> die eingesetzten Ausgangsmaterialien beruhen zudem auf nachwachsenden Rohstoffen, Naturstoffbasis Cellulose,
> die speziell eingesetzte Hydroxypropylcellulose ist ein marktgängiges technisches Produkt, welches bereits im großen Maßstab hergestellt wird und vergleichsweise preisgünstig erhältlich ist,
> die Herstellung der Polymere für die Interferenzpigmente gestaltet sich dadurch besonders einfach, daß nur eine chirale Komponente und daß nur eine einstufige Reaktion erforderlich sind,
> auch die Verarbeitung der hergestellten Polymere zu Interferenzpigmenten gestaltet sich einfach, da wegen des Auftretens der chiral-nematischen Phase bei Raumtemperatur für die Orientierung ein relativ geringer Energieaufwand betrieben werden muß,
> im Vergleich zu herkömmlich pigmentierten Lacken ist mit den Interferenzpigmenten dank einer schmalbandigen Remissionskurve eine höhere Farbbrillanz erreichbar,
> es darf für den Fall, daß keine Aromaten vorhanden sind, erwartet werden, daß die Lacke eine größere Lichtbeständigkeit besitzen, da sie weniger Lichtanteile im sichtbaren und im UV-Bereich absorbieren,
> es ist auch ein einfaches Recycling der neuen Lacke denkbar, da ein Mischen von Komponenten im Vergleich zu herkömmlich pigmentierten Lacksystemen möglich ist.

## Patentansprüche

1. Interferenzpigmente aus flüssigkristallinen, dreidimensional vernetzten Hauptketten-Polymeren (LCP) für farbige Lacke, in denen die Hauptgruppen-Mesogene zumindest näherungsweise chiral-nematisch geordnet sind,
**gekennzeichnet durch** die Gemeinsamkeit folgender Merkmale:
- die flüssigkristallinen Hauptketten-Polymere (LCP) aus einem oder aus einer Mischung mehrerer veresterter Celluloseether bestehen,
- hergestellt aus Celluloseethern mit einer Molmasse von 500 bis 1.000.000,
- wobei die Anhydroglucose-Einheiten der Cellulose mit einem durchschnittlichen molaren Substitutionsgrad von 2 bis 5 mit Kohlenwasserstoffketten verethert sind und
- wobei die Celluloseether mit einem durchschnittlichen molaren Substitutionsgrad von 1,5 bis 3 mit ungesättigten Carbonsäureresten verestert sind.

2. Interferenzpigmente nach Anspruch 1,
**dadurch gekennzeichnet,**
daß der/die Celluloseether in Seitenketten Kohlenwasserstoffketten mit 2 bis 10 Kohlenstoffatomen enthält/enthalten.

3. Interferenzpigmente nach Anspruch 1,
**dadurch gekennzeichnet,**
daß die Celluloseether zusätzlich mit gesättigten Carbonsäureresten verestert sind.

4. Interferenzpigmente nach Anspruch 1,
**dadurch gekennzeichnet,**
daß der/die Celluloseether in Seitenketten mehrere, maximal fünf Propylenoxideinheiten enthält/enthalten.

5. Interferenzpigmente nach Anspruch 1,
**dadurch gekennzeichnet,**
daß der/die Celluloseether mit vorzugsweise ungesättigten Carbonsäureresten der Methacrylsäure, Crotonsäure, Vinylessigsäure, Maleinsäure, Fumarsäure oder Undecensäure verestert ist/sind.

6. Interferenzpigmente nach Anspruch 1,
**dadurch gekennzeichnet,**
daß der/die Celluloseether aus einer 0-(2-Hydroxypropyl)-cellulose, verestert mit Vinylessigsäureresten, gebildet ist/sind.

7. Interferenzpigmente nach Anspruch 1,
**dadurch gekennzeichnet,**
daß die Interferenzpigmente eine Filmdicke von 5 bis 200 um aufweisen.

8. Interferenzpigmente nach Anspruch 1,
**dadurch gekennzeichnet,**
daß die plättchenförmigen Interferenzpigmente einen Durchmesser von 5 bis 100 µm aufweisen.

9. Verfahren zum Herstellen von plättchenförmigen Interferenzpigmenten, insbesondere für solche nach Anspruch 1, bei dem durch Aufbringen von flüssigkristallinen Hauptketten-Polymeren (LCP) in flüssigem Zustand auf einer glatten Unterlage ein Film mit zumindest näherungsweise chiral-nematisch geordneten Molekülen erzeugt wird, bei dem dieser Film ausgehärtet und dreidimensional vernetzt wird, von der Unterlage abgezogen und in plättchenförmige Partikel zerkleinert wird, wobei vor Weiterverarbeitung der Partikel als Interferenzpigmente zu große und zu kleine Partikel durch ein korngrößen-selektives Trennverfahren aussortiert werden,
**dadurch gekennzeichnet,**
daß der Film aus flüssigkristallinen Hauptketten-Polymeren (LCP) gemäß folgender Kennzeichnung als Lösungsmittelauftrag aufgebracht oder aus einem Pulver aufgeschmolzen wird:
- die flüssigkristallinen Hauptketten-Polymere (LCP) aus einem oder aus einer Mischung mehrerer veresterter Celluloseether bestehen,
- hergestellt aus Celluloseethern mit einer Molmasse von 500 bis 1.000.000,
- wobei die Anhydroglucose-Einheiten der Cellulose mit einem durchschnittlichen molaren Substitutionsgrad von 2 bis 5 mit Kohlenwasserstoffketten verethert sind und
- wobei die Celluloseether mit einem durchschnittlichen molaren Substitutionsgrad von 1,5 bis 3 mit ungesättigten Carbonsäureresten verestert sind.

10. Verfahren nach Anspruch 9,
**dadurch gekennzeichnet,**
daß der/die Celluloseether in Seitenketten Kohlenwasserstoffketten mit 2 bis 10 Kohlenstoffatomen enthält/enthalten.

11. Verfahren nach Anspruch 9,
**dadurch gekennzeichnet,**
daß die Celluloseether zusätzlich mit gesättigten Carbonsäureresten verestert sind.

12. Verfahren nach Anspruch 9,
**dadurch gekennzeichnet,**
daß der/die Celluloseether in Seitenketten mehrere, maximal fünf Propylenoxideinheiten enthält/enthalten.

13. Verfahren nach Anspruch 9,
**dadurch gekennzeichnet,**
daß der/die Celluloseether mit vorzugsweise ungesättigten Carbonsäureresten der Methacrylsäure, Crotonsäure, Vinylessigsäure, Maleinsäure, Fumarsäure oder Undecensäure verestert ist/sind.

14. Verfahren nach Anspruch 9,
**dadurch gekennzeichnet,**
daß der/die Celluloseether aus einer O-(2-Hydroxypropyl)-cellulose, verestert mit Vinylessigsäureresten, gebildet ist/sind.

15. Verfahren nach Anspruch 9,
**dadurch gekennzeichnet,**
daß die bei der Filmbildung auf die Unterlage aufzurakelnde Masse aus wenigstens zwei unterschiedlichen, unvernetzten flüssigkristallinen Polymeren - veresterten Celluloseethern - gemischt ist, wobei die Netzebenenabstände in dem einen Polymer größer und in dem anderen Polymer kleiner als die Wellenlänge der gewünschten Interferenz farbe des herzustellenden Interferenzpigmentes sind, so daß sich in dem Polymergemisch ein zwischen den Netzebenenabständen der einzelnen Polymere liegender, der Wellenlänge der gewünschten Interferenzfarbe entsprechender Netzebenenabstand einstellt, wobei das Mischungsverhältnis der Polymere umgekehrt analog zu den Unterschieden der jeweiligen Netzebenenabstände zur Wellenlänge der gewünschten Interferenzfarbe gewählt ist.

16. Verfahren nach Anspruch 9,
**dadurch gekennzeichnet,**
daß in dem auf die Unterlage aufgerakelten Film in noch unvernetztem Zustand die Ganghöhe der Helix der chiral-nematischen Anordnung der Moleküle und somit der Netzebenenabstand in dem Film durch eine Temperierung des Filmes derart beeinflußt wird, daß der Netzebenenabstand der Wellenlänge der gewünschten Interferenzfarbe entspricht.

17. Verfahren nach Anspruch 9,
**dadurch gekennzeichnet,**
daß der Film in einer Stärke von 5 bis 200 um aufgerackelt wird.

18. Verfahren nach Anspruch 9,
**dadurch gekennzeichnet,**
daß nur plättchenförmige Interferenzpigmente mit einem Durchmesser von 5 bis 100 µm verwendet werden.

19. Lack zum Lackieren von Gebrauchsgegenständen, insbesondere von Fahrzeugkarosserien, in dem zumindest auch, vorzugsweise nur plättchenförmige, bei der Lack-Applikation sich selbsttätig etwa parallel zur Gegenstandsoberfläche ausrichtende Interferenzpigmente aus flüssigkristallinen, dreidimensional vernetzten Hauptketten-Polymeren (LCP) eingemischt sind, in denen die Hauptgruppen-Mesogene zumindest näherungsweise chiral-nematisch geordnet sind,
**gekennzeichnet durch** die Gemeinsamkeit folgender Merkmale:
- die flüssigkristallinen Hauptketten-Polymere (LCP) aus einem oder aus einer Mischung mehrerer veresterter Celluloseether bestehen,
- hergestellt aus Celluloseethern mit einer Molmasse von 500 bis 1.000.000,
- wobei die Anhydroglucose-Einheiten der Cellulose mit einem durchschnittlichen molaren Substitutionsgrad von 2 bis 5 mit Kohlenwasserstoffketten verethert sind und
- wobei die Celluloseether mit einem durchschnittlichen molaren Substitutionsgrad von 1,5 bis 3 mit ungesättigten Carbonsäureresten verestert sind.

20. Lack nach Anspruch 19,
**dadurch gekennzeichnet,**
daß der/die Celluloseether in Seitenketten Kohlenwasserstoffketten mit 2 bis 10 Kohlenstoffatomen enthält/enthalten.

21. Lack nach Anspruch 19,
**dadurch gekennzeichnet,**
daß die Celluloseether zusätzlich mit gesättigten Carbonsäureresten verestert sind.

22. Lack nach Anspruch 19,
**dadurch gekennzeichnet,**
daß der/die Celluloseether in Seitenketten mehrere, maximal fünf Propylenoxideinheiten enthält/enthalten.

23. Lack nach Anspruch 19,
daß der/die Celluloseether mit vorzugsweise ungesättigten Carbonsäureresten der Methacrylsäure, Crotonsäure, Vinylessigsäure, Maleinsäure, Fumarsäure oder Undecensäure verestert sind.

24. Lack nach Anspruch 19,
**dadurch gekennzeichnet,**
daß der/die Celluloseether aus einer O-(2-Hydroxypropyl)-cellulose, verestert mit Vinylessigsäureresten, gebildet ist/sind.

25. Lack nach Anspruch 19,
**dadurch gekennzeichnet,**
daß Interferenzpigmente mit unterschiedlichen Netzebenenabständen gemischt im Lack enthalten sind.

26. Lack nach Anspruch 19,
**dadurch gekennzeichnet,**
daß die Interferenzpigmente eine Stärke von 5 bis 200 µm aufweisen.

27. Lack nach Anspruch 19,
**dadurch gekennzeichnet,**
daß die plättchenförmigen Interferenzpigmente einen Durchmesser von 5 bis 100 µm aufweisen.

28. Mehrlagig lackierter Gebrauchsgegenstand, insbesondere Fahrzeugkarosserie, mit in der farbbestimmenden Lacklage der Lackierung zumindest auch, vorzugsweise nur eingelagerten Interferenzpigmenten entsprechend der gewünschten Farbtönung des Gebrauchsgegenstandes, wobei die in der farbbestimmenden Lacklage eingelagerten Interferenzpigmente plättchenförmig ausgebildet und etwa parallel zur Gegenstandsoberfläche ausgerichtet sind und als ganzes jeweils aus dreidimensional vernetzten flüssigkristallinen Hauptketten-Polymeren (LCP) bestehen, wobei die Hauptgruppen-Mesogene innerhalb der Interferenzpigmente zumindest näherungsweise chiral-nematisch geordnet sind,
**gekennzeichnet durch** die Gemeinsamkeit folgender Merkmale:
- die flüssigkristallinen Hauptketten-Polymere (LCP) aus einem oder aus einer Mischung mehrerer veresterter Celluloseether bestehen,
- hergestellt aus Celluloseethern mit einer Molmasse von 500 bis 1.000.000,
- wobei die Anhydroglucose-Einheiten der Cellulose mit einem durchschnittlichen molaren Substitutionsgrad von 2 bis 5 mit Kohlenwasserstoffketten verethert sind und
- wobei die Celluloseether mit einem durchschnittlichen molaren Substitutionsgrad von 1,5 bis 3 mit ungesättigten Carbonsäureresten verestert sind.

29. Gebrauchsgegenstand nach Anspruch 28,
**dadurch gekennzeichnet,**
daß der/die Celluloseether in Seitenketten Kohlenwasserstoffketten mit 2 bis 10 Kohlenstoffatomen enthält/enthalten.

30. Gebrauchsgegenstand nach Anspruch 28,
**dadurch gekennzeichnet,**
daß die Celluloseether zusätzlich mit gesättigten Carbonsäureresten verestert sind.

31. Gebrauchsgegenstand nach Anspruch 28,
**dadurch gekennzeichnet,**
daß der/die Celluloseether in Seitenketten mehrere, maximal fünf Propylenoxideinheiten enthält/enthalten.

32. Gebrauchsgegenstand nach Anspruch 28,
**dadurch gekennzeichnet,**
daß der/die Celluloseether mit vorzugsweise ungesättigten Carbonsäureresten der Methacrylsäure, Crotonsäure, Vinylessigsäure, Maleinsäure, Fumarsäure oder Undecensäure verestert ist/sind.

33. Gebrauchsgegenstand nach Anspruch 28,
**dadurch gekennzeichnet,**
daß der/die Celluloseether aus einer O-(2-Hydroxypropyl)-cellulose, verestert mit Vinylessigsäureresten, gebildet ist/sind.

34. Gebrauchsgegenstand nach Anspruch 28,
**dadurch gekennzeichnet,**
daß der die farbbestimmende, mit Interferenzpigmenten versehene Lacklage tragende Untergrund dunkelfarbig ist.

35. Gebrauchsgegenstand nach Anspruch 28,
**dadurch gekennzeichnet,**
daß der die farbbestimmende, mit Interferenzpigmenten versehene Lacklage tragende Untergrund in der selben Farbtönung gehalten ist wie ein Farbton der farbbestimmenden Lacklage.

36. Gebrauchsgegenstand nach Anspruch 28,
**dadurch gekennzeichnet,**
daß Interferenzpigmente mit unterschiedlichen Netzebenenabständen gemischt in der farbbestimmenden Lacklage enthalten sind.

37. Gebrauchsgegenstand nach Anspruch 28,
**dadurch gekennzeichnet,**
daß die Interferenzpigmente eine Filmdicke von 5 bis 200 µm aufweisen.

38. Gebrauchsgegenstand nach Anspruch 28,
**dadurch gekennzeichnet,**
daß die plättchenförmigen Interferenzpigmente einen Durchmesser von 5 bis 100 µm aufweisen.

## Claims

1. Interference pigments, comprising liquid-crystalline, three-dimensionally crosslinked main-chain polymers (LCPs), for coloured coating materials, in which the main-group mesogens have an at least approximately chiral nematic order,
**characterized by** the conjunction of the following features:
- the liquid-crystalline main-chain polymers (LCPs) consist of one or of a mixture of two or more esterified cellulose ethers,
- prepared from cellulose ethers having a molar mass of from 500 to 1,000,000,
- the anhydroglucose units of the cellulose having an average molar degree of substitution of from 2 to 5 being etherified with hydrocarbon chains, and
- the cellulose ethers having an average molar degree of substitution of from 1.5 to 3 being esterified with unsaturated carboxylic acid residues.

2. Interference pigments according to Claim 1,
**characterized** in that the cellulose ether/ethers contains/contain, in side chains, hydrocarbon chains having 2 to 10 carbon atoms.

3. Interference pigments according to Claim 1,
**characterized** in that the cellulose ethers are additionally esterified with saturated carboxylic acid residues.

4. Interference pigments according to Claim 1,
**characterized** in that the cellulose ether/ethers contains/contain, in side chains, two or more, but not more than five, propylene oxide units.

5. Interference pigments according to Claim 1,
**characterized** in that the cellulose ether/ethers is/are esterified with preferably unsaturated carboxylic acid residues of methacrylic acid, crotonic acid, vinylacetic acid, maleic acid, fumaric acid or undecenoic acid.

6. Interference pigments according to Claim 1,
**characterized** in that the cellulose ether/ethers is/are formed from an O-(2-hydroxypropyl)cellulose esterified with vinylacetic acid residues.

7. Interference pigments according to Claim 1,
**characterized** in that the interference pigments have a film thickness of from 5 to 200 µm.

8. Interference pigments according to Claim 1,
**characterized** in that the platelet-shaped interference pigments have a diameter of from 5 to 100 µm.

9. Process for the preparation of platelet-shaped interference pigments, especially for those according to Claim 1, in which a film of molecules having at least approximately chiral nematic order is produced by applying liquid-crystalline main-chain polymers (LCPs) in liquid state to a smooth substrate, where this film is cured and three-dimensionally crosslinked, removed from the substrate and broken down into platelet-shaped particles, with particles which are too large and too small being separated out by means of a particle size-selective separation process before the particles are subsequently processed as interference pigments,
**characterized** in that the film of liquid-crystalline main-chain polymers (LCPs) as characterized below are applied as solvent application or melted on from a powder:
- the liquid-crystalline main-chain polymers (LCPs) consist of one or of a mixture of two or more esterified cellulose ethers,
- prepared from cellulose ethers having a molar mass of from 500 to 1,000,000,
- the anhydroglucose units of the cellulose having an average molar degree of substitution of from 2 to 5 being etherified with hydrocarbon chains, and
- the cellulose ethers having an average molar degree of substitution of from 1.5 to 3 being esterified with unsaturated carboxylic acid residues.

10. Process according to Claim 9,
**characterized** in that the cellulose ether/ethers contains/contain, in side chains, hydrocarbon chains having 2 to 10 carbon atoms.

11. Process according to Claim 9,
**characterized** in that the cellulose ethers are additionally esterified with saturated carboxylic acid residues.

12. Process according to Claim 9,
**characterized** in that the cellulose ether/ethers contains/contain, in side chains, two or more, but not more than five, propylene oxide units.

13. Process according to Claim 9,
**characterized** in that the cellulose ether/ethers is/are esterified with preferably unsaturated carboxylic acid residues of methacrylic acid, crotonic acid, vinylacetic acid, maleic acid, fumaric acid or undecenoic acid.

14. Process according to Claim 9,
**characterized** in that the cellulose ether/ethers is/are formed from an 0-(2-hydroxypropyl)cellulose esterified with vinylacetic acid residues.

15. Process according to Claim 9,
**characterized** in that the composition which is to be knife-coated onto the substrate in the course of film formation is mixed from at least two different, noncrosslinked liquid-crystalline polymers, which are esterified with cellulose ethers, the interplanar spacings being greater in one polymer and smaller in the other polymer than the wavelength of the desired interference colour of the interference pigment to be prepared, so that in the polymer mixture an interplanar spacing is established which lies between the interplanar spacings of the individual polymers and corresponds to the wavelength of the desired interference colour, the mixing ratio of the polymers, in contrast, being chosen in analogy to the differences of the respective interplanar spacings from the wavelength of the desired interference colour.

16. Process according to Claim 9,
**characterized** in that in the film knife-coated onto the substrate, in the as yet uncrosslinked stage, the pitch of the helix of the chiral nematic arrangement of the molecules, and thus the interplanar spacing in the film, is influenced by heat treatment of the film in such a way that the interplanar spacing corresponds to the wavelength of the desired interference colour.

17. Process according to Claim 9,
**characterized** in that the film is knife-coated on in a thickness of from 5 to 200 µm.

18. Process according to Claim 9,
**characterized** in that only platelet-shaped interference pigments having a diameter of from 5 to 100 µm are used.

19. Coating material for painting commodity articles, especially vehicle bodies, in which, having been incorporated by mixing, there are interference pigments of which at least some, preferably all, are platelet-shaped, which automatically align themselves approximately parallel to the surface of the article in the course of application of the coating material, and which are composed of liquid-crystalline, three-dimensionally crosslinked main-chain polymers (LCPs) in which the main-group mesogens have an at least approximately chiral nematic order,
**characterized by** the conjunction of the following features:
- the liquid-crystalline main-chain polymers (LCPs) consist of one or of a mixture of two or more esterified cellulose ethers,
- prepared from cellulose ethers having a molar mass of from 500 to 1,000,000,
- the anhydroglucose units of the cellulose having an average molar degree of substitution of from 2 to 5 being etherified with hydrocarbon chains, and
- the cellulose ethers having an average molar degree of substitution of from 1.5 to 3 being esterified with unsaturated carboxylic acid residues.

20. Coating material according to Claim 19,
**characterized** in that the cellulose ether/ethers contains/contain, in side chains, hydrocarbon chains having 2 to 10 carbon atoms.

21. Coating material according to Claim 19,
**characterized** in that the cellulose ethers are additionally esterified with saturated carboxylic acid residues.

22. Coating material according to Claim 19,
**characterized** in that the cellulose ether/ethers contains/contain, in side chains, two or more, but not more than five, propylene oxide units.

23. Coating material according to Claim 19,
**characterized** in that the cellulose ether/ethers is/are esterified with preferably unsaturated carboxylic acid residues of methacrylic acid, crotonic acid, vinylacetic acid, maleic acid, fumaric acid or undecenoic acid.

24. Coating material according to Claim 19,
**characterized** in that the cellulose ether/ethers is/are formed from an 0-(2-hydroxypropyl)cellulose esterified with vinylacetic acid residues.

25. Coating material according to Claim 19,
**characterized** in that interference pigments with different interplanar spacings are present, mixed, in the coating material.

26. Coating material according to Claim 19,
**characterized** in that the interference pigments have a thickness of from 5 to 200 µm.

27. Coating material according to Claim 19,
**characterized** in that the platelet-shaped interference pigments have a diameter of from 5 to 100 µm.

28. Multilayer-coated commodity article, especially vehicle body, the colour-defining layer of the coating system containing pigments of which at least some, preferably all, are incorporated interference pigments, in accordance with the desired coloration of the commodity article, the interference pigments incorporated in the colour-defining coating layer being platelet-shaped in form, aligned approximately parallel to the surface of the article and consisting as a whole in each case of three-dimensionally crosslinked liquid-crystalline main-chain polymers (LCPs), the main-group mesogens within the interference pigments having an at least approximately chiral nematic order,
**characterized by** the conjunction of the following features:
- the liquid-crystalline main-chain polymers (LCPs) consist of one or of a mixture of two or more esterified cellulose ethers,
- prepared from cellulose ethers having a molar mass of from 500 to 1,000,000,
- the anhydroglucose units of the cellulose having an average molar degree of substitution of from 2 to 5 being etherified with hydrocarbon chains, and
- the cellulose ethers having an average molar degree of substitution of from 1.5 to 3 being esterified with unsaturated carboxylic acid residues.

29. Commodity article according to Claim 28,
**characterized** in that the cellulose ether/ethers contains/contain, in side chains, hydrocarbon chains having 2 to 10 carbon atoms.

30. Commodity article according to Claim 28,
**characterized** in that the cellulose ethers are additionally esterified with saturated carboxylic acid residues.

31. Commodity article according to Claim 28,
**characterized** in that the cellulose ether/ethers contains/contain, in side chains, two or more, not more than five, propylene oxide units.

32. Commodity article according to Claim 28,
**characterized** in that the cellulose ether/ethers is/are esterified with preferably unsaturated carboxylic acid residues of methacrylic acid, crotonic acid, vinylacetic acid, maleic acid, fumaric acid or undecenoic acid.

33. Commodity article according to Claim 28,
**characterized** in that the cellulose ether/ethers is/are formed from an O-(2-hydroxypropyl)cellulose esterified with vinylacetic acid residues.

34. Commodity article according to Claim 28,
**characterized** in that the substrate carrying the colour-defining, interference pigment-containing coating layer is dark in colour.

35. Commodity article according to Claim 28,
**characterized** in that the substrate carrying the colour-defining, interference pigment-containing coating layer is held in the same coloration as one shade of the colour-defining coating layer.

36. Commodity article according to Claim 28,
**characterized** in that interference pigments having different interplanar spacings are present, mixed, in the colour-defining coating layer.

37. Commodity article according to Claim 28,
**characterized** in that the interference pigments have a film thickness of from 5 to 200 µm.

38. Commodity article according to Claim 28,
**characterized** in that the platelet-shaped interference pigments have a diameter of from 5 to 100 µm.

## Revendications

1. Pigments à interférences consistant en polymères à cristaux liquides dans les chaînes principales réticulés en trois dimensions, pour peintures colorées, dans lesquels les mésogènes des groupes principaux sont, au moins approximativement, en phase chirale-nématique,
caractérisés par l'ensemble des points suivants :
- les polymères à cristaux liquides en chaînes principales consistent en un éther cellulosique estérifié ou en un mélange de plusieurs éthers cellulosiques estérifiés,
- préparés à partir d'éthers cellulosiques ayant une masse moléculaire de 500 à 1 000 000,
- et dans lesquels les motifs d'anhydroglucose de la cellulose sont éthérifiés à un taux de substitution molaire moyen de 2 à 5 par des chaînes hydrocarbonées et
- les éthers cellulosiques sont estérifiés à un taux de substitution molaire moyen de 1,5 à 3 par des radicaux d'acides carboxyliques insaturés.

2. Pigments à interférences selon revendication 1, caractérisés en ce que le ou les éthers cellulosiques contiennent en chaînes latérales des chaînes hydrocarbonées en C2-C10.

3. Pigments à interférences selon revendication 1, caractérisés en ce que le ou les éthers cellulosiques sont en outre estérifiés par des radicaux d'acides carboxyliques saturés.

4. Pigments à interférences selon revendication 1, caractérisés en ce que le ou les éthers cellulosiques contiennent en chaînes latérales plusieurs motifs, au maximum cinq motifs d'oxyde de propylène.

5. Pigments à interférences selon revendication 1, caractérisés en ce que le ou les éthers cellulosiques sont de préférence estérifiés par des radicaux d'acides carboxyliques insaturés de l'acide méthacrylique, de l'acide crotonique, de l'acide vinylacétique, de l'acide maléique, de l'acide fumarique ou de l'acide undécénoïque.

6. Pigments à interférences selon revendication 1, caractérisés en ce que le ou les éthers cellulosiques sont constitués d'une O-(2-hydroxypropyl)cellulose estérifiée par des radicaux d'acide vinylacétique.

7. Pigments à interférences selon revendication 1, caractérisés en ce qu'ils présentent une épaisseur de pellicule de 5 à 200 µm.

8. Pigments à interférences selon revendication 1, caractérisés en ce que, sous forme de tablettes, ils ont un diamètre de 5 à 100 µm.

9. Procédé pour la préparation de pigments à interférences sous forme de tablettes, en particulier selon revendication 1, dans lequel, par application de polymères à cristaux liquides dans les chaînes principales, à l'état liquide, sur un support lisse, on forme une pellicule contenant des molécules disposées, au moins approximativement, en phase chirale-nématique, on durcit cette pellicule et on la réticule dans trois dimensions, on la détache du support et on la broie sous forme de particules en tablettes, et avant utilisation de ces particules en tant que pigments à interférences, on en sépare par tamisage les particules trop grosses et trop fines par une opération de séparation sélective en fonction des dimensions de grains,
caractérisé en ce que la pellicule consiste en polymères à cristaux liquides dans les chaînes principales présentant les caractéristiques suivantes, appliqués dans un solvant ou à partir d'une poudre par fusion :
- les polymères à cristaux liquides dans les chaînes principales consistent en un éther cellulosique estérifié ou en un mélange de plusieurs éthers cellulosiques estérifiés,
- préparés à partir d'éthers cellulosiques à une masse moléculaire de 500 à 1 000 000,
- dans lesquels les motifs d'anhydroglucose de la cellulose sont éthérifiés à un taux de substitution molaire moyen de 2 à 5 par des chaînes hydrocarbonées et
- les éthers cellulosiques sont estérifiés à un taux de substitution molaire moyen de 1,5 à 3 par des radicaux d'acides carboxyliques insaturés.

10. Procédé selon revendication 9, caractérisé en ce que le ou les éthers cellulosiques contiennent en chaînes latérales des chaînes hydrocarbonées en C2-C10.

11. Procédé selon revendication 9, caractérisé en ce que le ou les éthers cellulosiques sont en outre estérifiés par des radicaux d'acides carboxyliques saturés.

12. Procédé selon revendication 9, caractérisé en ce que le ou les éthers cellulosiques contiennent en chaînes latérales plusieurs motifs, au maximum cinq motifs, d'oxydes de propylène.

13. Procédé selon revendication 9, caractérisé en ce que le ou les éthers cellulosiques sont de préférence estérifiés par des radicaux d'acides carboxyliques insaturés de l'acide méthacrylique, de l'acide crotonique, de l'acide vinylacétique, de l'acide maléique, de l'acide fumarique ou de l'acide undécénoïque.

14. Procédé selon revendication 9, caractérisé en ce que le ou les éthers cellulosiques sont constitués d'une O-(2-hydroxypropyl)cellulose estérifiée par des radicaux d'acide vinylacétique.

15. Procédé selon revendication 9, caractérisé en ce que la masse à appliquer à la racle sur un support pour formation de la pellicule consiste en un mélange d'au moins deux polymères à cristaux liquides différents, non réticulés - des éthers cellulosiques estérifiés -, les distances entre plans réticulaires d'un polymère étant supérieures à celles de l'autre polymère inférieures à la longueur d'ondes de la teinte d'interférences voulue pour le pigments à interférences qu'on prépare de sorte que, dans le mélange des polymères, il apparaît une distance entre plans réticulaires située entre celles des polymères individuels et correspondant à la longueur d'ondes pour la teinte d'interférences voulue, les proportions de mélange entre les polymères étant choisies à l'inverse analogues aux différences entre les distances particulières entre plans réticulaires et la longueur d'ondes de la teinte d'interférence voulue.

16. Procédé selon revendication 9, caractérisé en ce que, dans la pellicule appliquée à la racle sur le support et à l'état encore non réticulé, on agit sur le pas de l'hélice de la disposition chirale-nématique des molécules et, par suite, sur la distance entre plans réticulaires dans la pellicule par chauffage de cette dernière, en sorte que la distance entre plans réticulaires corresponde à la longueur d'ondes de la teinte d'interférences voulue.

17. Procédé selon revendication 9, caractérisé en ce que la pellicule est appliquée à la racle à une épaisseur de 5 à 200 µm.

18. Procédé selon revendication 9, caractérisé en ce que l'on utilise uniquement des pigments à interférences en forme de tablettes à un diamètre de 5 à 100 µm.

19. Peinture pour le revêtement d'objets utilitaires, en particulier de carrosseries de véhicules, dans laquelle on a mélangé en partie au moins et de préférence uniquement des pigments à interférences à l'état de tablettes, qui s'orientent spontanément à l'application de la peinture à peu près parallèlement à la surface de l'objet et qui consistent en polymères à cristaux liquides dans les chaînes principales, réticulés dans les trois dimensions et dans lesquels les mésogènes des groupes principaux sont en disposition au moins approximative chirale-nématique,
caractérisée par l'ensemble des points suivants :
- les polymères à cristaux liquides dans les chaînes principales consistent en un ou plusieurs éthers cellulosiques estérifiés,
- préparés à partir d'éthers cellulosiques ayant une masse moléculaire de 500 à 1 000 000,
- dans lesquels les motifs d'anhydroglucose de la cellulose sont éthérifiés à un taux de substitution molaire moyen de 2 à 5 par des chaînes hydrocarbonées et
- dans lesquels les éthers cellulosiques sont estérifiés à un taux de substitution molaire moyen de 1,5 à 3, par des radicaux d'acides carboxyliques insaturés.

20. Peinture selon revendication 9, caractérisée en ce que le ou les éthers cellulosiques contiennent en chaînes latérales des chaînes hydrocarbonées en C2-C10.

21. Peinture selon revendication 19, caractérisée en ce que les éthers cellulosiques sont en outre estérifiés par des radicaux d'acides carboxyliques saturés.

22. Peinture selon revendication 19, caractérisée en ce que les éthers cellulosiques contiennent en chaînes latérales plusieurs motifs, au maximum cinq, d'oxyde de propylène.

23. Peinture selon revendication 9, caractérisée en ce que les éthers cellulosiques sont de préférence estérifiés par des radicaux d'acides carboxyliques insaturés de l'acide méthacrylique, de l'acide crotonique, de l'acide vinylacétique, de l'acide maléique, de l'acide fumarique ou de l'acide undécénoïque.

24. Peinture selon revendication 19, caractérisée en ce que le ou les éthers cellulosiques sont constitués d'une 0-(2-hydroxypropyl)cellulose estérifiée par des radicaux d'acide vinylacétique.

25. Peinture selon revendication 19, caractérisée en ce qu'elle contient en mélange des pigments à interférences à distances différentes entre les plans réticulaires.

26. Peinture selon revendication 19, caractérisée en ce que les pigments à interférences ont une épaisseur de 5 à 200 µm.

27. Peinture selon revendication 19, caractérisée en ce que les pigments à interférences, sous forme de tablettes, ont un diamètre de 5 à 100 µm.

28. Objet utilitaire portant un revêtement de peinture à plusieurs couches, en particulier carrosseries de véhicules, avec, dans la couche de peinture du revêtement qui détermine la teinte, et en partie ou de préférence exclusivement, des pigments à interférences occlus, correspondants à la teinte voulue pour l'objet utilitaire, les pigments à interférences occlus dans la couche de peinture déterminant la teinte ayant une forme de tablettes et s'orientant parallèlement à la surface de l'objet et consistant en totalité en polymères à cristaux liquides dans les chaînes principales, réticulés à trois dimensions, les mésogènes des groupes principaux contenus dans les pigments à interférences étant au moins approximativement en disposition chirale-nématique,
caractérisé par l'ensemble des points suivants :
- les polymères à cristaux liquides dans les chaînes principales consistent en un ou plusieurs éthers cellulosiques estérifiés,
- préparés à partir d'éthers cellulosiques ayant une masse moléculaire de 500 à 1 000 000,
- dans lesquels les motifs d'anhydroglucose de la cellulose sont éthérifiés à un taux de substitution molaire moyen de 2 à 5 par des chaînes hydrocarbonées et
- dans lesquels les éthers cellulosiques sont estérifiés à un taux de substitution molaire moyen de 1,5 à 3 par des radicaux d'acides carboxyliques insaturés.

29. Objet utilitaire selon revendication 28, caractérisé en ce que le ou les éthers cellulosiques contiennent en chaînes latérales des chaînes hydrocarbonées en C2-C10.

30. Objet utilitaire selon revendication 28, caractérisé en ce que les éthers cellulosiques sont en outre estérifiés par des radicaux d'acides carboxyliques saturés.

31. Objet utilitaire selon revendication 28, caractérisé en ce que le ou les éthers cellulosiques contiennent dans les chaînes latérales plusieurs, au maximum cinq motifs d'oxyde de propylène.

32. Objet utilitaire selon revendication 28, caractérisé en ce que le ou les éthers cellulosiques sont de préférence estérifiés par des radicaux d'acides carboxyliques insaturés de l'acide méthacrylique, de l'acide crotonique, de l'acide vinylacétique, de l'acide maléique, de l'acide fumarique ou de l'acide undécénoïque.

33. Objet utilitaire selon revendication 28, caractérisé en ce que le ou les éthers cellulosiques sont constitués d'une O-(2-hydroxypropyl) cellulose estérifiée par des radicaux d'acide vinylacétique.

34. Objet utilitaire selon revendication 28, caractérisé en ce que le support portant la couche de peinture contenant les pigments à interférences et qui détermine la teinte est lui-même de couleur sombre.

35. Objet utilitaire selon revendication 28, caractérisé en ce que le support portant la couche de peinture contenant des pigments à interférences et qui détermine la teinte est lui-même coloré dans la même nuance que la couche de peinture déterminant la teinte.

36. Objet utilitaire selon revendication 28, caractérisé en ce que la couche de peinture déterminant la teinte contient un mélange de pigments à interférences à distances différentes entre les plans réticulaires.

37. Objet utilitaire selon revendication 28, caractérisé en ce que les pigments à interférences ont une épaisseur de pellicule de 5 à 200 µm.

38. Objet utilitaire selon revendication 28, caractérisé en ce que les pigments à interférences, à l'état de tablettes, ont un diamètre de 5 à 100 µm.
